# EUROPÄISCHE PATENTSCHRIFT

(11) **EP 2 920 553 B1**
(45) Veröffentlichungstag und Bekanntmachung des Hinweises auf die Patenterteilung: **11.01.2017**
(21) Anmeldenummer: 13792681.2
(22) Anmeldetag: 19.11.2013
(51) Int. Cl.: G01D 5/241

(54) **KAPAZITIVER SENSOR ZUR ERFASSUNG EINER RELATIVBEWEGUNG ZWEIER BENACHBARTER KÖRPER**
CAPACITIVE SENSOR FOR DETECTING A RELATIVE MOVEMENT OF TWO ADJACENT BODIES
CAPTEUR CAPACITIF PERMETTANT DE DÉTECTER UN MOUVEMENT RELATIF DE DEUX CORPS ADJACENTS

(30) Priorität: 19.11.2012 DE 102012221110
(43) Veröffentlichungstag der Anmeldung: 23.09.2015
(73) Patentinhaber: Behr-Hella Thermocontrol GmbH, 70469 Stuttgart (DE)
(72) Erfinder: MARQUAS, Karsten, 59757 Arnsberg (DE)
(74) Vertreter: dompatent von Kreisler Selting Werner - Partnerschaft von Patent- und Rechtsanwälten mbB
(86) Internationale Anmeldenummer: PCT/EP2013/074151
(87) Internationale Veröffentlichungsnummer: WO 2014/076295

(56) Entgegenhaltungen:
- WO-A1-2011/020869
- US-A- 5 206 785
- US-A1- 2004 008 038
- US-A1- 2011 176 196
- US-B1- 6 373 265

## Beschreibung

Die Erfindung betrifft einen kapazitiven Sensor zur Erfassung einer Relativbewegung zweier benachbarter Körper, bei deren Annäherung oder Entfernung.

Kapazitive Sensoren werden beispielsweise als Druck-, Kraft- bzw. Wegsensoren eingesetzt. Um mit Hilfe eines kapazitiven Sensors geringe Relativbewegungen zweier benachbarter Körper detektieren zu können, bedarf es einer zuverlässigen Differenzierung der Veränderung des Elektrodenabstands innerhalb des Sensors, was insbesondere bei relativ kleinen Bewegungen und Abstandsänderungen problematisch sein kann. Man könnte die elektrischen Signale des Sensors verstärken, um eine bessere Differenzierung zu erzielen. Bei sehr geringen Verformungswegen, die mit einem kapazitiven Sensor erfasst werden sollen, sind dann aber recht große Verstärkungen erforderlich, wobei man dann an die Grenzen der Elektronik stößt, was deren Rauschverhalten betrifft.

Aus US-A-2011/176196 ist eine Bedienvorrichtung gemäß dem Oberbegriff des Anspruchs 1 bekannt.

Aufgabe der Erfindung ist es, einen verbesserten kapazitiven Sensor zu schaffen, bei dem, ohne dass die Signale übermäßig stark verstärkt werden müssen, auch Kleinstbewegungen detektiert werden können.

Zur Lösung dieser Aufgabe wird mit der Erfindung ein kapazitiver Sensor zur Erfassung einer Relativbewegung zweier benachbarter Körper (z.B. bei deren Annäherung oder Entfernung) vorgeschlagen, der versehen ist mit den Merkmalen des Anspruchs 1.

Der erfindungsgemäße kapazitive Sensor ist derart konstruiert, dass eine mechanische Übersetzung der Bewegung der beiden Körper in eine größere Annäherung bzw. Abstandsänderung der beiden Elektroden umgesetzt wird, so dass bei geringem elektrischen Verstärkungsverhältnissen dennoch kleine Hübe sicher detektiert werden können. Dies hat seine Ursache in der Ausbildung, insbesondere des zweiten Elektroden-Trägerkörpers als rückstellfähiges Folienelement, an dem die zweite Elektrode lediglich in einem einzigen (Mitten-) Bereich fixiert ist. Der zweite Elektroden-Trägerkörper stützt sich dabei an dem ersten Elektroden-Trägerkörper, der seinerseits die erste Elektrode trägt, ab und zwar an zwei gegenüberliegenden Abstützabschnitten. Diese beiden Abstützabschnitte liegen außerhalb beider Elektroden. Zwischen diesen Abstützabschnitten und beidseitig des Befestigungsbereichs der zweiten Elektrode am zweiten Elektroden-Trägerkörper drückt gegen diesen zweiten Elektroden-Trägerkörper ein Andrückkörper, der zu diesem Zweck zwei Andrückvorsprünge aufweist. Durch die Durchbiegung des rückstellfähigen zweiten Elektroden-Trägerkörpers, wenn die Andrückvorsprünge gegen den zweiten Elektroden-Trägerkörper drücken, wird die zweite Elektrode in Richtung auf die erste Elektrode vorbewegt, und zwar in einem größeren Maße, als sich der erste Elektroden-Trägerkörper relativ zum Andrückkörper bewegt. Damit ist eine mechanische Übersetzung, wie oben beschrieben, realisiert.

In vorteilhafter Weiterbildung der Erfindung kann vorgesehen sein, dass die Anordnung aus den Abstützabschnitten des zweiten Elektroden-Trägerkörpers an dem ersten Elektroden-Trägerkörper und den Andrückvorsprüngen des Andrückkörpers symmetrisch zum Befestigungsbereich des zweiten Elektroden-Trägerkörpers für die zweite Elektrode.

Ferner kann es von Vorteil sein, wenn der erste Elektroden-Trägerkörper eine an zumindest zwei gegenüberliegenden Seiten durch Begrenzungsrandabschnitte begrenzte Vertiefung aufweist, innerhalb derer die erste Elektrode angeordnet ist, wobei sich der zweite Elektroden-Trägerkörper mit seinen Abstützabschnitten auf den Begrenzungsrandabschnitten abstützt.

In weiterer vorteilhafter Ausgestaltung der Erfindung ist vorgesehen, dass der erste Elektroden-Trägerkörper auf seiner der ersten Elektrode abgewandten Seite eine weitere erste Elektrode aufweist und dass ein weiterer zweiter Elektroden-Trägerkörper mit einer weiteren zweiten Elektrode sowie mit weiteren Abstützabschnitten und ein weiterer Andrückkörper mit weiteren Andrückvorsprüngen vorgesehen sind, deren Anordnung relativ zueinander so, wie in einem der vorhergehenden Ansprüchen beschrieben, getroffen ist.

Schließlich sei noch darauf hingewiesen, dass sich als Folienelement insbesondere Federstahl eignet.

Der kapazitive Sensor nach der Erfindung eignet sich beispielsweise dazu, Bewegungen von Tastenkörpern an Bedienvorrichtungen für insbesondere Fahrzeugkomponenten detektieren zu können. Bedienvorrichtungen für insbesondere Fahrzeugkomponenten weisen im Regelfall eine Frontblende oder Vorderseite auf, an der eine Vielzahl von gegebenenfalls auch unterschiedlich ausgestalteten Bedienelementen, in Form von z.B. Drehknöpfen, Drucktastern, Wippschaltern oder dergleichen angeordnet sind. Zusätzlich existieren auch Bedienelemente in Form von, von der Vorderseite abstehenden Tastenkörpern, die ein Betätigungsende aufweisen, das eine Oberseite und eine Unterseite aufweist. Derartige Bedienelemente werden mitunter auch Balkontasten genannt, da ihre Betätigungsenden über die Vorderseite der Bedienvorrichtung vorstehen.

Ein derartiger Tastenkörper kann, als Betätigungsleiste ausgebildet, mehrere Symbolfelder aufweisen (beispielsweise mehrere mit fortlaufenden Ziffern versehene, nebeneinanderliegende Bereiche), wobei sich der gesamte Tastenkörper unabhängig davon, in welchem Bereich er betätigt wird, bewegt. Durch eine kapazitive Näherungssensorik kann erkannt werden, welches Symbolfeld mit dem Finger einer Hand bei Betätigung des Tastenkörpers berührt wird.

Es hat sich ferner herausgestellt, dass es für den Bedienkomfort vorteilhaft sein kann, wenn sich der Tastenkörper bei Betätigung im Wesentlichen nur unmerklich bewegen lässt. Über eine akustische oder haptische Rückmeldung kann dann für den Bediener eine Bestätigung der Betätigung des Tastenkörpers erfolgen.

Hinsichtlich einer Bedienvorrichtung mit einem vorstehenden Tastenkörper, der eine genaue, reproduzierbare und insbesondere gleichbleibende Bewegung bei seiner Betätigung ausführt, kann es zweckmäßig sein, wenn die Bedienvorrichtung versehen ist mit
- einem Gehäuse mit einer Vorderseite,
- einem eine Längserstreckung aufweisenden Tastenkörper, der ein über die Vorderseite des Gehäuses vorstehendes Betätigungsende und ein innerhalb des Gehäuses angeordnetes Lagerungsende aufweist,
- wobei das Betätigungsende eine Oberseite sowie eine Unterseite aufweist, die sich in einem Winkel von ungleich Null Winkelgrad über die Vorderseite überstehend erstrecken und die zur Eingabe eines Bedienbefehls durch manuelle auf die Ober- oder Unterseite erfolgende Kraftausübung betätigbar ist,
- einem Trägerkörper, der ein Lager aufweist, durch das der Tastenkörper in zwei zueinander im Wesentlichen orthogonalen Raumachsen bewegbar ist,
- wobei das Lager mindestens drei Aufhängungselemente aufweist, mittels derer das Lagerende des Tastenkörpers an dem Trägerkörper bewegbar gehalten ist und die in mindestens zwei voneinander beabstandeten Aufhängungsebenen angeordnet sind, die sich zueinander sowie zur Längserstreckung des Tastenkörpers parallel erstrecken.

Der Tastenkörper, der ähnlich wie die Spacebar-Taste einer Computertastatur eine langgestreckte Betätigungsleiste hat, steht über die Vorderseite des Gehäuses über. Innerhalb des Gehäuses befindet sich ein Trägerkörper mit einem Lager zur (geringfügig bewegbaren) Lagerung des Tastenkörpers in zwei zueinander im Wesentlichen orthogonalen Raumrichtungen bzw. -achsen. Das Betätigungsende des Tastenkörpers ragt über die Vorderseite des Gehäuses. Das Betätigungsende (d.h. die Betätigungsleiste) weist eine Ober- und eine Unterseite auf, die in einem Winkel von ungleich Null Winkelgrad über die Vorderseite überstehen. Durch manuelle Kraftausübung auf die Ober- bzw. Unterseite erfolgt eine geringfügige Bewegung des Tastenkörpers nach unten bzw. nach oben.

Die Besonderheit der Bedienvorrichtung besteht in der Ausgestaltung des Lagers, das mindestens drei Aufhängungselemente aufweist. Diese drei Aufhängungselemente sind auf zwei Aufhängungsebenen aufgeteilt, die im Wesentlichen winklig zur Vorderseite verlaufen und zueinander im Wesentlichen parallel sowie auch im Wesentlichen parallel zur Längserstreckung des Tastenkörpers sind.

Durch die Aufhängungselemente, bei denen es sich um biegesteife, rückstellfähige Elemente in Form beispielsweise von Stäben oder dergleichen handelt, kommt es bei Betätigung des Tastenkörpers zu einer geringfügigen Parallelverschiebung desselben relativ zur Vorderseite des Gehäuses. Dabei ist entscheidend, dass die Art der Anordnung und Ausgestaltung der Aufhängungselemente für eine spielfreie Lagerung des Tastenkörpers an dem Trägerkörper sorgen. Außerdem ist die Lagerung des Tastenkörpers geräuscharm.

Mit dem zuvor beschriebenen Konzept ist es mit Vorteil möglich, die haptische Rückmeldung einer Bedienung der Betätigungsleiste bzw. des Betätigungsendes des Tastenkörpers durch einen Vibrationen erzeugenden Aktuator zu realisieren, der den Tastenkörper in orthogonal zu seiner Betätigung gerichtete Schwingungen versetzt. Denn die Lagerung erlaubt durch sowohl am Trägerkörper als auch am Tastenkörper eingespannte Aufhängungselemente eine Parallelverschiebung des Tastenkörpers relativ zur Vorderseite der Bedienvorrichtung bzw. zum Trägerkörper.

In weiterer vorteilhafter Ausgestaltung der Erfindung ist vorgesehen, dass das Lager ein vom Trägerkörper abstehendes Vorsprungselement aufweist, das im Wesentlichen in der gleichen Raumrichtung wie die Aufhängungselemente von dem Trägerkörper absteht und zwischen den beiden Aufhängungselementen angeordnet ist, und dass der Tastenkörper an dem Vorsprungselement des Lagers gegebenenfalls anliegt.

Zweckmäßig ist es, wenn vier Aufhängungselemente vorhanden sind, die zur Lagerung des Tastenkörpers an dem Trägerkörper dienen. Dabei sind dann jeweils zwei Aufhängungselemente in einer gemeinsamen Aufhängungsebene angeordnet. Zweckmäßig ist es, wenn an den beiden entgegengesetzten Endbereichen der Betätigungsleiste bzw. des Tastenkörpers jeweils zwei Aufhängungselemente befestigt sind, die in den beiden unterschiedlichen Aufhängungsebenen angeordnet sind.

Es ist aber ebenso denkbar, dass in der einen Aufhängungsebene zwei Aufhängungselemente und in der anderen Aufhängungsebene lediglich ein Aufhängungselement angeordnet ist. In jeder Aufhängungsebene können auch mehr als zwei Aufhängungselemente angeordnet sein.

Durch die feste Einspannung der Aufhängungselemente sowohl am Trägerkörper als auch an der Betätigungsleiste kommt es zu dem oben angesprochenen Parallelversatz der Betätigungsleiste bei deren Bedienung.

Als Aufhängungselemente eignen sich insbesondere Federstahlstäbe, d.h. allgemeiner ausgedrückt, druck- als auch zugkraftwiderstandsfähige und biegesteife, insbesondere rückstellfähige Aufhängungselemente. Bei diesen Aufhängungselementen handelt es sich beispielsweise um strangförmige Elemente (runde oder eckige Stäbe). Hierbei verbiegen sich die Aufhängungselemente über ihre gesamte Erstreckung zwischen dem Trägerkörper und dem Tastenkörper in den beiden im Wesentlichen orthogonal zueinander verlaufenden Raumachsen. Es sind aber auch Konzepte für die Aufhängungselemente denkbar, bei denen zwei getrennte Abschnitte eines Aufhängungselements für die Verbiegbarkeit in jeweils einer anderen der beiden Raumachsen verantwortlich sind. In diesem Fall kann jedes Aufhängungselement ein rückstellfähiges flaches Streifenmaterial, insbesondere ein Federstahlband, aufweisen, das um seine Längsachse um 90° gedreht relativ zueinander ausgerichtet ist. Alternativ kann jeder der Abschnitte als U-förmig gebogenes, rückstellfähiges, flaches Streifenmaterial, insbesondere Federstahlband, ausgebildet ist und die beiden U-förmigen Streifenmaterialabschnitte bezüglich ihrer beiden Paare von Schenkeln um 90° zueinander verdreht sowie ausgehend von ihren Basisabschnitten in entgegengesetzte Richtungen weisend ausgerichtet sind.

Die Erfindung wird nachfolgend anhand eines Ausführungsbeispiels und unter Bezugnahme auf die Zeichnung näher erläutert. Im Einzelnen zeigen dabei:
- Fig. 1: eine perspektivische Darstellung eines Teils einer beispielhaften Bedienvorrichtung,
- Fig. 2: eine perspektivische, geschnittene Ansicht des Lagers zur spielfreien und geräuscharmen Lagerung des Tastenkörpers an dem Trägerkörper (entsprechend der Schnittlinie II-II der Fig. 3),
- Fig. 3: eine Schnittansicht durch das Lager mit in diesem integrierten Druckbzw. Kraftsensor als Bewegungssensor zur Erkennung einer Tastenkörper- bzw. Betätigungsleistenbedienung und
- Fign. 4 und 5: die Bewegung des Tastenkörpers relativ zum Trägerkörper bei Ausübung von Druck auf die Unter- bzw. Oberseite der Betätigungsleiste des Tastenkörpers,
- Fign. 6 und 7: ein zweites Ausführungsbeispiel für die Ausbildung der Aufhängungselemente und
- Fig. 8: ein weiteres Ausführungsbeispiel eines Aufhängungselements.

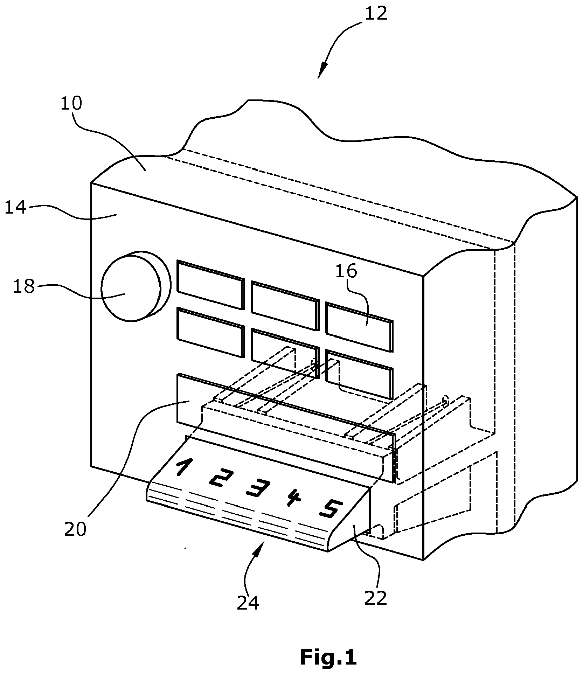

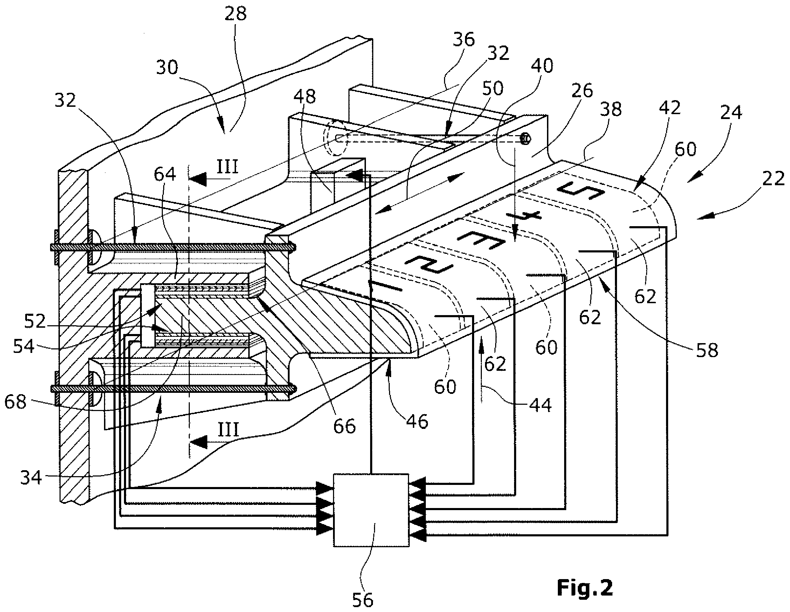

Fig. 1 zeigt perspektivisch ein Gehäuse 10 einer Bedienvorrichtung 12. Das Gehäuse 10 weist eine Vorderseite 14 mit Drucktasten 16, einem Drehknopf 18, einer Anzeigeeinheit 20 sowie mit einer Betätigungsleiste 22 auf. Die Betätigungsleiste 22 bildet das Betätigungsende 24 eines Tastenkörpers 26 (siehe Fig. 2), der an einem Trägerkörper 28 gelagert ist, welcher seinerseits innerhalb des Gehäuses 10 angeordnet ist.

Zur Lagerung des Tastenkörpers 26 dient ein Lager 30, das in diesem Ausführungsbeispiel vier Aufhängungselemente 32,34 aufweist (in Fig. 2 ist eines der beiden Aufhängungselemente 34 nicht zu erkennen), die auf zwei zueinander parallelen Aufhängungsebenen 36,38 verteilt, angeordnet sind. Die Aufhängungselemente 32,34 sind paarweise an den in Längserstreckung der Betätigungsleiste 22 angeordneten Enden des Tastenkörpers 26 angeordnet. Sie sind sowohl am Trägerkörper 28 als auch am Tastenkörper 26 eingespannt gehalten, so dass sich bei einer Kraftausübung in Richtung des Pfeils 40 auf die Oberseite 42 der Betätigungsleiste 22 als auch bei Kraftausübung in Richtung des Pfeils 44 auf die Unterseite 46 der Betätigungsleiste 22 eine Parallelverschiebung der Betätigungsleiste 22 relativ zum Trägerkörper 28 ergibt. Diese Parallelverschiebung ist hoch präzise, spielfrei, geräuscharm und minimal, wenn die Betätigungsleiste 22 betätigt wird.

Wie anhand von Fig. 2 angedeutet, wirkt zwischen dem Trägerkörper 28 und dem Tastenkörper 26 oder auf den Tastenkörper 26 ein Vibrationsaktuator 48, der den Tastenkörper 26 in Richtung des Doppelpfeils 50 in Vibrationen versetzt, wenn die Betätigungsleiste 22 des Tastenkörpers 26 betätigt wird. Alternativ zu einem oszillierenden Vibrationsaktuator 48 kann auch ein anderer Mechanismus verwendet werden, der z.B. elektro- bzw. magnetomechanisch arbeitet und beispielsweise ein U-förmiges magnetisches Joch mit einer Spule zur impulsartigen Anregung/Erzeugung eines Magnetfeldes zum Anziehen/Abstoßen eines Magnetankers aufweist und den Tastenkörper 26 in die eine Querrichtung bewegt, wobei sich der Tastenkörper 26 automatisch wieder zurückbewegt (beim Stromlos-Schalten der Spule), und zwar in Folge der mechanischen Rückstellspannung in den Aufhängungselementen 34 bei deren Verformung durch die Querbewegung. Das Joch und der Magnetanker sind am Trägerkörper 28 bzw. Tastenkörper 26 angebracht, so dass sich derjenige Körper, der mit dem Magnetanker verbunden ist, gegenüber dem anderen Körper (oder umgekehrt) vor- und zurückbewegt.

Die Bedienung der Betätigungsleiste 22 wird durch weiter unten noch zu beschreibende, in diesem Ausführungsbeispiel kapazitiv arbeitende Druck- bzw. Kraft- bzw. Wegsensoren 52,54 erkannt, die elektrisch mit einer Auswerteeinheit 56 verbunden sind, welche u. a. auch den Vibrationsaktuator 48 ansteuert. Zusätzlich umfasst der Tastenkörper 26 eine Näherungssensorik 58 in Form von kapazitiv wirkenden Elektroden 60, die unterschiedlichen Symbolfeldern 62 der Betätigungsleiste 22 zugeordnet sind. Über die beiden Sensoren 52,54 (wobei auch nur ein Sensor ausreichen würde) kann also erkannt werden, ob die Betätigungsleiste 22 betätigt worden ist oder nicht. Darüber hinaus wird durch die kapazitive Näherungssensorik 58 erkannt, an welchem der Symbolfelder 62 der Finger einer Hand bei Bedienung der Betätigungsleiste 22 anliegt. Die Quittierung der Erkennung der Bedienung der Betätigungsleiste 22 erfolgt sodann durch Ansteuerung des Vibrationsaktuators 48 o.dgl. Bewegungsmechanismus (siehe oben), was zu einer taktilen Rückmeldung führt und damit vom Benutzer erkannt wird.

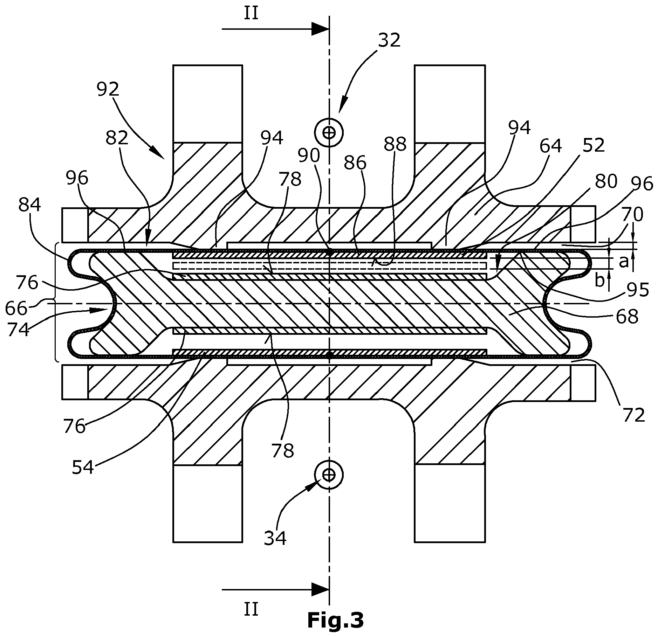

Wie beispielsweise anhand von Fig. 2 zu erkennen ist, erstreckt sich von dem Trägerkörper 28 ein Vorsprungselement 64, das einen zum Tastenkörper 26 hin offenen Aufnahmeraum 66 aufweist. In diesen Aufnahmeraum 66 ragt als Lagerende des Tastenkörpers 28 ein Fortsatz 68 desselben. Zwischen dem Fortsatz 68 und dem Vorsprungselement 64 befinden sich zwei Zwischenräume 70,72 (siehe Fig. 3), zwischen denen jeweils einer der Sensoren 52,54 angeordnet ist. Bei Bedienung der Betätigungsleiste 22 verschiebt sich der Fortsatz 68 innerhalb des Aufnahmeraums 66 unter Beibehaltung seiner Ausrichtung (wegen der oben angesprochenen Parallelverschiebung des Tastenkörpers 26) nach oben bzw. nach unten, was über die beiden Sensoren 52,54 (bzw. einen der beiden Sensoren) erkannt wird.

Der Aufbau der Sensorik ist beispielhaft anhand von Fig. 3 zu erkennen. Der Fortsatz 68 bildet einen ersten Elektroden-Trägerkörper 74, der eine erste Elektrode 76 mit einer Elektrodenfläche 78 trägt. Diese Elektrode 76 ist innerhalb einer Vertiefung 80 des ersten Elektroden-Trägerkörpers 74 angeordnet. Die Vertiefung 80 wird von einem zweiten Elektroden-Trägerkörper 82 überspannt, der in diesem Ausführungsbeispiel als Federstahl-Folienelement 84 ausgebildet ist. An dem zweiten Elektroden-Trägerkörper 82 befindet sich eine zweite Elektrode 86 mit einer der Elektrodenfläche 78 der ersten Elektrode 76 zugewandten zweiten Elektrodenfläche 88. Die zweite Elektrode 86 ist ausschließlich im mittleren Bereich mit dem rückstellfähig flexiblen, biegbaren Federstahl-Folienelement 84 verbunden, was an dem Befestigungspunkt 90 in Fig. 3 gezeigt ist.

An dem zweiten Elektroden-Trägerkörper 82 liegt als Andrückkörper 92 das Vorsprungelement 64 an dessen einer den Aufnahmeraum 66 begrenzenden Innenseite an. Hierzu weist der Andrückkörper 92 zwei Andrückvorsprünge 94 auf, die im Wesentlichen symmetrisch zum Befestigungspunkt 90 der zweiten Elektrode 86 an dem zweiten Elektroden-Trägerkörper 82 angeordnet sind. Beide Andrückvorsprünge 94 liegen in demjenigen Bereich des zweiten Trägerkörpers 82 an, in dem das Federstahl-Folienelement 84 des zweiten Trägerkörpers 82 die Vertiefung 80 des ersten Trägerkörpers 74 überspannt. Zu erwähnen ist ferner noch, dass sich das Federstahl-Folienelement 84 an den gegenüberliegenden Begrenzungsrandabschnitten 95 der Vertiefung 80 des ersten Trägerkörpers 74 an diesem abstützt; diese Begrenzungsrandabschnitte 95 der Vertiefung 80 bilden also die Auflagen für die Abstützabschnitte 96 des zweiten Elektroden-Trägerkörpers 82.

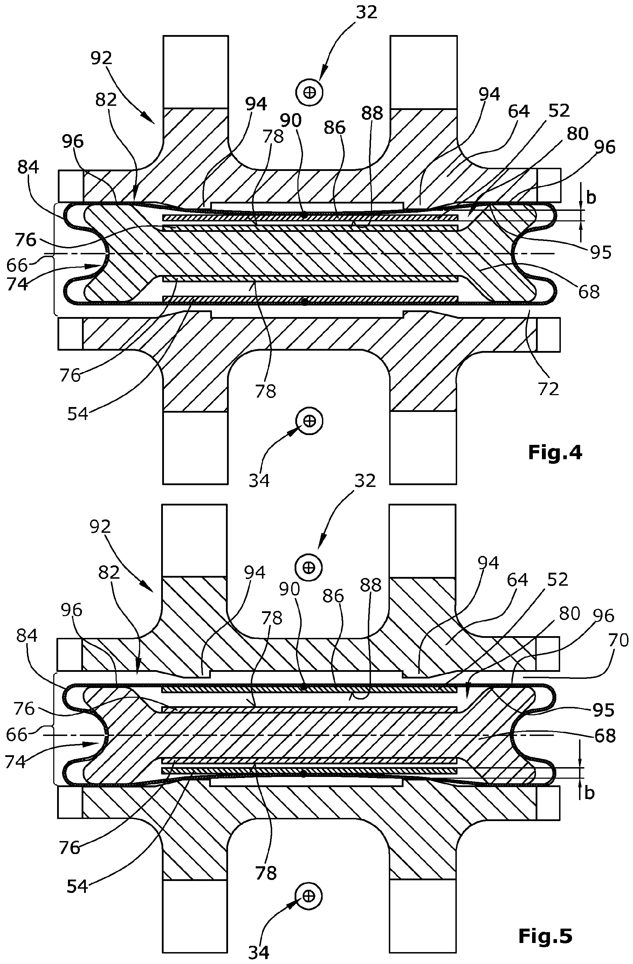

Durch die zuvor beschriebene Konstruktion, die im Übrigen auch an der, bezogen auf Fig. 3, Unterseite des ersten Trägerkörpers 74 im Zusammenspiel mit dem ebenfalls auf Fig. 3 bezogenen unteren Teil des Andrückkörpers 92 ausgebildet ist (und dort den zweiten Sensor 54 bildet), wird erreicht, dass eine innerhalb des Aufnahmeraums 66 erfolgende, relativ kleine Hubbewegung des ersten Trägerkörpers 74 bzw. des Fortsatzes 68 in eine dem gegenüber größere Verschiebung der beiden Elektroden 76,86 umgesetzt wird. Dies wird anhand eines Vergleichs der Fig. 3 mit jeder der Fign. 4 und 5 deutlich, die die Bewegung des ersten Elektroden-Trägerkörpers 74 relativ zum Andrückkörper 92 zeigen, und zwar je nachdem, ob auf die Unterseite 46 (Fig. 4) oder auf die Oberseite 42 (Fig. 5) der Betätigungsleiste 22 eine Betätigungskraft ausgeübt wird. Die Verschiebung b der zweiten Elektrode 86 (siehe Fign. 4 und 5 und in Fig. 3 angedeutet) ist größer als der Abstand a gemäß (Fig. 3), um den sich der Tastenkörper 26 bei Betätigung bewegt.

Durch die in den Fign. 3 bis 5 gezeigte mechanische Konstruktion wird also eine Art Übersetzungsgetriebe zur Umsetzung des Hubs zwischen dem ersten Elektroden-Trägerkörper 74 relativ zum Andrückkörper 92 in eine demgegenüber größere Annäherung der beiden Elektroden 76,86 geschaffen.

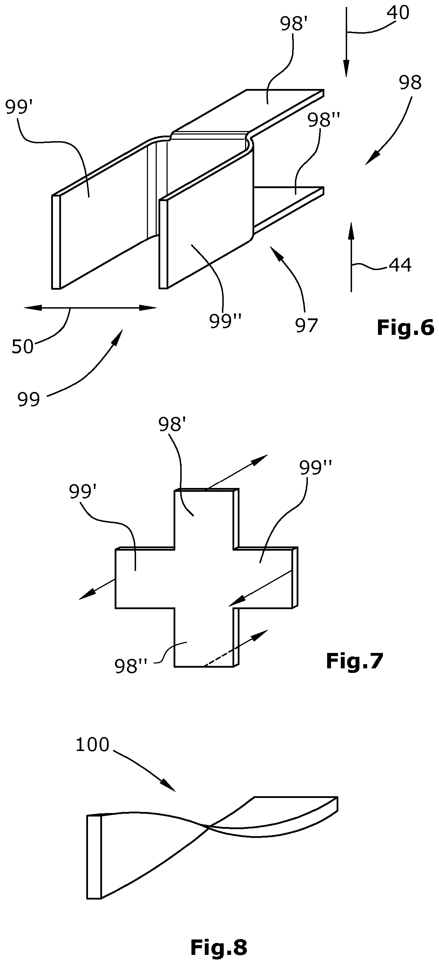

Fign. 6 und 7 zeigen eine alternative Ausgestaltung eines Aufhängungselements 97, das zwei U-förmig gebogene Abschnitte 98,99 aus Federstahlband oder gestanztem Federstahl-Flachmaterial aufweist und in der gezeigten Orientierung mit dem Abschnitt 98 an dem Trägerkörper 28 sowie mit dem Abschnitt 99 an dem Tastenkörper 26 befestigt ist. Der Abschnitt 98 ist dabei in Richtung der Pfeile 40 und 44 (siehe Fig. 1) auf- und abbewegbar, während der Abschnitt 99 in Richtung des Doppelpfeils 50 seitlich bewegbar ist. Fig. 7 zeigt, wie die beiden Abschnitte 98,99 ausgehend von einem kreuzförmigen Federstahl-Flachmaterial durch 90°-Abwinkelungen der Schenkel 98',98" (Bildung des Abschnitts 98 - in Fig. 7 angedeutet durch die von den Schenkeln 98',98" ausgehenden Pfeile) und durch 90°-Abwinkelung der Schenkel 99',99" (Bildung des Abschnitts 99 - in Fig. 7 angedeutet durch die von den Schenkeln 99',99" ausgehenden Pfeile) erstellt werden. Ein einzelnes Federstahlband, das über seine Länge oder aber auf einen (Mitten-)Längsabschnitt zentriert um 90° um die Längsachse verdreht ist, kann ebenso gut als Aufhängungselement 97 genutzt werden (siehe das Ausführungsbeispiel eines derartigen Aufhängungselements 100 in Fig. 8).

### BEZUGSZEICHENLISTE

- 10: Gehäuse der Bedienvorrichtung
- 12: Bedienvorrichtung
- 14: Vorderseite des Gehäuses
- 16: Drucktasten
- 18: Drehknopf
- 20: Anzeigeeinheit
- 22: Betätigungsleiste des Tastenkörpers
- 24: Betätigungsende des Tastenkörpers
- 26: Tasten körper
- 28: Trägerkörper
- 30: Lager für den Tastenkörper
- 32: Aufhängungselemente des Lagers
- 34: Aufhängungselemente des Lagers
- 36: Aufhängungsebene
- 38: Aufhängungsebene
- 40: Pfeil
- 42: Oberseite der Betätigungsleiste
- 44: Pfeil
- 46: Unterseite der Betätigungsleiste
- 48: Vibrationsaktuator
- 50: Doppelpfeil
- 52: Wegsensor
- 54: Wegsensor
- 56: Auswerteeinheit
- 58: Näherungssensorik
- 60: Elektroden der Näherungssensorik
- 62: Symbolfelder auf der Betätigungsleiste
- 64: Vorsprungelement
- 66: Aufnahmeraum für das Vorsprungelement
- 68: Fortsatz
- 70: Zwischenraum
- 72: Zwischenraum
- 74: erster Elektroden-Trägerkörper
- 76: erste Elektrode
- 78: Elektrodenfläche der ersten Elektrode
- 80: Vertiefung
- 82: zweiter Elektroden-Trägerkörper
- 84: Federstahl-Folienelement
- 86: zweite Elektrode
- 88: Elektrodenfläche der zweiten Elektrode
- 90: Befestigungspunkt
- 92: Andrückkörper
- 94: Andrückvorsprünge am Andrückkörper
- 95: Begrenzungsrandabschnitt der Vertiefung
- 96: Abstützabschnitte des zweiten Elektroden-Trägerkörpers
- 97: Aufhängungselement
- 98: erster Abschnitt des Aufhängungselements
- 98': Schenkel dieses ersten Abschnitts
- 98": Schenkel dieses ersten Abschnitts
- 99: zweiter Abschnitt des Aufhängungselements
- 99': Schenkel dieses zweiten Abschnitts
- 99": Schenkel dieses zweiten Abschnitts
- 100: Aufhängungselement

## Patentansprüche

1. Kapazitiver Sensor zur Erfassung einer Relativbewegung zweier benachbarter Körper, mit
- einer ersten Elektrode (76), die eine erste elektrisch leitende Elektrodenfläche (78) aufweist und an einem ersten Elektroden-Trägerkörper (74) angeordnet ist,
- einer der ersten Elektrode (76) gegenüberliegenden zweiten Elektrode (86), die eine zweite elektrisch leitende Elektrodenfläche (88) aufweist und an einem zweiten Elektroden-Trägerkörper (82) angeordnet ist,
- wobei der zweite Elektroden-Trägerkörper (82) als rückstellfähiges Folienelement (84) ausgebildet ist, das sich an zwei voneinander beabstandeten, gegenüberliegenden Abstützabschnitten (96) beidseitig der beiden Elektroden (76,86) an dem ersten Elektroden-Trägerkörper (74) abstützt, und
- einem Andrückkörper (92) auf der der zweiten Elektrode (86) abgewandten Seite des zweiten Elektroden-Trägerkörpers (82),
**dadurch gekennzeichnet,**
- **dass** der Andrückkörper (92) mindestens zwei Andrückvorsprünge (94) aufweist, die im Bereich zwischen den Abstützabschnitten (96) des zweiten Elektroden-Trägerkörpers (82) an dessen der zweiten Elektrode (86) abgewandten Seite anliegen und die bei einer Relativbewegung des ersten Elektroden-Trägerkörpers (74) und des Andrückkörpers (92) unter Verbiegung des zweiten Elektroden-Trägerkörpers (82) gegen diesen drücken,
- **dass** die mindestens zwei Andrückvorsprünge (94) bezüglich der gleichen Raumrichtung, in der die Abstützabschnitte (96) des zweiten Elektroden-Trägerkörpers (82) beabstandet sind, einen Abstand von einander aufweisen, und
- **dass** die zweite Elektrode (86) an dem zweiten Elektroden-Trägerkörper (82) lediglich in einem Befestigungsabschnitt befestigt ist, der sich im Wesentlichen in der Mitte zwischen den Andrückbereichen des zweiten Elektroden-Trägerkörpers (82) befindet, in welchen die Andrückvorsprünge (94) an dem zweiten Elektroden-Trägerkörper (82) anliegen.

2. Kapazitiver Sensor nach Anspruch 1, **dadurch gekennzeichnet, dass** die Anordnung aus den Abstützabschnitten (96) des zweiten Elektroden-Trägerkörpers (82) an dem ersten Elektroden-Trägerkörper (74) und den Andrückvorsprüngen (94) des Andrückkörpers (92) symmetrisch zum Befestigungsbereich des zweiten Elektroden-Trägerkörpers (82) für die zweite Elektrode (86) ist.

3. Kapazitiver Sensor nach Anspruch 1 oder 2, **dadurch gekennzeichnet, dass** der erste Elektroden-Trägerkörper (74) eine an zumindest zwei gegenüberliegenden Seiten durch Begrenzungsrandabschnitte (95) begrenzte Vertiefung (80) aufweist, innerhalb derer die erste Elektrode (76) angeordnet ist, wobei sich der zweite Elektroden-Trägerkörper (82) mit seinen Abstützabschnitten (96) auf den Begrenzungsrandabschnitten (95) abstützt.

4. Kapazitiver Sensor nach einem der Ansprüche 1 bis 3, **dadurch gekennzeichnet, dass** der erste Elektroden-Trägerkörper (74) auf seiner der ersten Elektrode (76) abgewandten Seite eine weitere erste Elektrode (76) aufweist und dass ein weiterer zweiter Elektroden-Trägerkörper (82) mit einer weiteren zweiten Elektrode (86) sowie mit weiteren Abstützabschnitten und ein weiterer Andrückkörper (92) mit weiteren Andrückvorsprüngen (94) vorgesehen sind, deren Anordnung relativ zueinander so, wie in einem der vorhergehenden Ansprüchen beschrieben, getroffen ist.

5. Kapazitiver Sensor nach einem der Ansprüche 1 bis 4, **dadurch gekennzeichnet, dass** das Folienelement (84) Federstahl aufweist.

## Claims

1. A capacitive sensor for detecting a relative movement of two adjacent bodies, with
- a first electrode (76) which has a first electrically conductive electrode surface (78) and which is arranged on a first electrode supporting body (74),
- a second electrode (86) which is opposite the first electrode (76), has a second electrically conductive electrode surface (88) and is arranged on a second electrode supporting body (82),
- wherein the second electrode supporting body (82) is designed as a resilient film element (84) that is supported on the first electrode supporting body (74) on two spaced-apart opposing support sections (96) on both sides of the two electrodes (76, 86), and
- a pressure body (92) on the side of the electrode supporting body (82) facing away from the second electrode (86),
**characterized in that**
- said pressure body (92) comprises at least two pressure projections (94) that rest, in the region between the support sections (96) of the second electrode supporting body (82), against the side of the second electrode supporting body (82) facing away from the second electrode (86) and that press against the second electrode supporting body (82) while bending it, when there is a relative movement between the first electrode supporting body (74) and the second pressure body (92),
- the at least two pressure projections (94) are spaced apart from each other in the same spatial direction in which the support sections (96) of the second electrode supporting body (82) are spaced apart, and
- the second electrode (86) is secured to the second electrode supporting body (82) only in a securing section that is substantially in the center between the pressure regions of the second electrode supporting body (82) in which the pressure projections (94) rest against the second electrode supporting body (82).

2. The capacitive sensor of claim 1, **characterized in that** the arrangement of the support sections (96) of the second electrode supporting body (82) on the first electrode supporting body (74) and of the pressure projections (94) of the pressure body (92) is symmetrical with respect to the securing section of the second electrode supporting body (82) for the second electrode (86).

3. The capacitive sensor of claim 1 or 2, **characterized in that** the first electrode supporting body (74) has a recess (80) on at least two opposite sides which is defined delimiting edge sections (95), in which recess the first electrode (76) is arranged, with the second electrode supporting body (82) being supported on the delimiting edge sections (95) by its support sections (96).

4. The capacitive sensor of one of claims 1 to 3, **characterized in that** the first electrode supporting body (74) has another first electrode (76) on its side averted from the first electrode (76), and that another second electrode supporting body (82) having another second electrode (86) as well as further support sections and another pressure body (92) having further pressure projections (94) are provided, their arrangement being as defined in one of the preceding claims.

5. The capacitive sensor of one of claims 1 to 4, **characterized in that** the film element (84) comprises spring steel.

## Revendications

1. Capteur capacitif permettant de détecter un mouvement relatif de deux corps adjacents, comprenant
- une première électrode (76) qui comporte une première surface électriquement conductrice (78) et est disposée sur un premier corps de support d'électrode (74),
- une deuxième électrode (86) en regard de la première électrode (76), qui comporte une deuxième surface électriquement conductrice (88) et est disposée sur un deuxième corps de support d'électrode (82),
- le deuxième corps de support d'électrode (82) étant formé comme élément film (84) rétractable qui s'appuie sur le premier corps de support d'électrode (74) de part et d'autre des deux électrodes (76, 86) sur deux zones d'appui (96) en regard et espacées l'une de l'autre, et
- un corps d'appui (92) sur la face du deuxième corps de support d'électrode (82) détournée de la deuxième électrode (86), **caractérisé en ce que**
- le corps d'appui (92) comprend au moins deux avancées d'appui (94) qui sont en appui, entre les zones d'appui (96) du deuxième corps de support d'électrode (82), sur le côté de ce dernier qui est détourné de la deuxième électrode, et qui, lors d'un mouvement relatif du premier corps de support d'électrode (74) et du corps d'appui (92), appuient sur le deuxième corps de support d'électrode (82) en le déformant,
- lesdites au moins deux avancées d'appui (94) présentent une distance entre elles dans la même direction d'espace que celle dans laquelle les zones d'appui (96) du deuxième corps de support d'électrode (82) sont espacées l'une de l'autre, et
- la deuxième électrode (86) est fixée au deuxième corps de support d'électrode (82) uniquement dans une zone de fixation qui est située sensiblement au milieu entre les zones d'appui du deuxième corps de support d'électrode (82) dans lesquelles les avancées d'appui (94) sont en appui sur le deuxième corps de support d'électrode (82).

2. Capteur capacitif selon la revendication 1, **caractérisé en ce que** l'agencement des zones d'appui (96) du deuxième corps de support d'électrode (82) sur le premier corps de support d'électrode (74) et des avancées d'appui (94) du corps d'appui (92) sont symétriques par rapport à la zone de fixation du deuxième corps de support d'électrode (82) pour la deuxième électrode (86).

3. Capteur capacitif selon la revendication 1 ou 2, **caractérisé en ce que** le premier corps de support d'électrode (74) comprend un enfoncement (80) délimité au moins sur deux côtés opposés par des zones de bord de délimitation (95) entre lesquelles est disposée la première électrode (76), le deuxième corps de support d'électrode (82) s'appuyant avec ses zones d'appui (96) sur les zones de bord de délimitation (95).

4. Capteur capacitif selon l'une des revendications 1 à 3, **caractérisé en ce que** le premier corps de support d'électrode (74) comporte, sur son côté détourné de la première électrode (76), une autre première électrode (76) et **en ce qu'**il est prévu un autre deuxième corps de support d'électrode (82) avec une autre deuxième électrode (86) et avec d'autres zones d'appui et un autre corps d'appui (92) avec d'autres avancées d'appui (94), dont la disposition des uns par rapport aux autres est telle que décrite dans l'une des revendications précédentes.

5. Capteur capacitif selon l'une des revendications 1 à 4, **caractérisé en ce que** l'élément film (84) comprend de l'acier à ressort.
